# EUROPÄISCHE PATENTANMELDUNG

(11) **EP 4 678 570 A1**
(43) Veröffentlichungstag der Anmeldung: **14.01.2026**
(21) Anmeldenummer: 25186950.9
(22) Anmeldetag: 02.07.2025
(51) Int. Cl.: B65G 47/71, B65G 47/76

(54) **VORRICHTUNG UND VERFAHREN ZUM TRANSPORTIEREN VON STÜCKGÜTERN MIT TRANSPORTWEICHE**

(30) Priorität: 08.07.2024 DE 102024119274
(71) Anmelder: Krones AG, 93073 Neutraubling (DE)
(72) Erfinder: Sorge, Andreas, 93073 Neutraubling (DE); Koehler, Patrick, 93073 Neutraubling (DE); Sanchez, Diego Javier Sarmiento, 93073 Neutraubling (DE); Schuesslburner, Helmut, 93073 Neutraubling (DE)
(74) Vertreter: Bittner, Bernhard

(57) **Zusammenfassung**

Vorrichtung zum Transportieren von Stückgütern und insbesondere von Behältnissen oder Gebinden mit einer Zuführeinrichtung, welche dazu geeignet ist, die Stückgüter entlang wenigstens eines ersten Zuführpfads einem Verteilbereich zuzuführen, und mit einer Abführeinrichtung, welche dazu geeignet ist, die Stückgüter wahlweise entlang wenigstens eines ersten Abführpfads oder eines zweiten Abführpfads abzuführen, wobei die Vorrichtung eine erste Verteileinrichtung (6) aufweist, welche zwischen wenigstens zwei Positionen bewegbar ist, wobei die erste Verteileinrichtung (6), dazu geeignet und bestimmt ist, die Stückgüter bei Anordnung der Verteileinrichtung (6) in der ersten Position zu dem ersten Abführpfad zu drängen und die Stückgüter bei Anordnung der ersten Verteileinrichtung (6) in der zweiten Position zu dem zweiten Abführpfad zu drängen oder zu führen.

## Beschreibung

Die vorliegende Erfindung bezieht sich auf eine Vorrichtung und ein Verfahren zum Transportieren von Stückgütern und insbesondere von Behältnissen. Im Stand der Technik ist es seit langem bekannt, Stückgüter und insbesondere Behältnisse, Gebinde oder dergleichen zu transportieren. Dabei ist es des Öfteren nötig, beispielsweise Behälter oder Behälterpulks auf unterschiedliche Transportgassen zu verteilen. Zu diesem Zweck sind unterschiedliche Vorrichtungen und Verfahren bekannt.

So ist es bekannt, Behältnisse oder Behältnispulks mittels Klappen zu verteilen. Daneben ist es auch bekannt, Behältnisse oder Behältnispulks mittels Segmentweichen zu verteilen.

Im Stand der Technik bekannte Vorrichtungen und Verfahren weisen einen Bereich auf, in dem die Behälterführung unterbrochen ist. Durch diese Unterbrechung der Gassenführung kann es an dieser Stelle zu Verkeilungen der Behältnisse kommen und die dadurch wiederum zu einem Anlagenstopp.

Die EP 0 585 685 B1 beschreibt eine Vorrichtung zum Überleiten eines in einer Reihe einspurig zulaufenden Gefäßstroms auf mehrere Förderspuren. Dabei ist eine Schaltweiche vorgesehen, die als Gleitfläche dient und deren stromauswärtiges zum einspurig zulaufenden Gefäßstrom weisendes Ende im Wesentlichen quer zur Förderrichtung verstellbar ist. Diese Schaltweiche ist dabei zumindest abschnittsweise biegeelastisch ausgeführt.

Aus der WO 97/19873 A1 ist eine Vorrichtung zum Ausleiten von einzelnen rotationssymmetrischen Behältern bekannt.

Die EP 0 624 532 A11 beschreibt eine Vorrichtung zum Sortieren von Flaschen oder Behältern mit einem von wenigstens einer zweispurigen Transportstrecke gebildeten Sortierbereich.

Aus der WO 2018/166 700 A1 ist eine Vorrichtung zum Aufteilen von auf einer Transportvorrichtung transportierten Behältern bekannt.

Die EP 4 335 793 A1 beschreibt einen elektrisch betriebenen Segmentausleiter. Dabei ist eine Vielzahl von Drängsegmenten vorgesehen, welche in den Transportpfad der Behältnisse zustellbar sind.

Aus der DE 10 2009 040 604 A1 ist eine Vorrichtung zum Ausleiten von Transportgütern bekannt.

Der vorliegenden Erfindung liegt die Aufgabe zugrunde, eine Vorrichtung und ein Verfahren zum Transportieren von Stückgütern und insbesondere von Behältnissen zur Verfügung zu stellen, welche insbesondere das Risiko von Verkeilungen verkleinern und auch einen schnelleren Transport von Stückgütern und insbesondere Behältnissen ermöglichen.

Besonders bevorzugt handelt es sich bei den Behältnissen um Kunststoffflaschen, Pulpeflaschen, Pouches, Glasflaschen oder deren Werkstückträger. Bei der in den Behältnissen befindlichen Flüssigkeit handelt es sich insbesondere um ein Getränk, beispielsweise Bier, Wein, Limonade, Säfte, Spirituosen, Wasser, oder ein Produkt aus dem HealthCare oder Pharmabereich.

Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Transportieren von Stückgütern und insbesondere von Behältnissen oder Gebinden weist eine Zuführeinrichtung auf, welche dazu geeignet und bestimmt ist, die Stückgüter entlang eines ersten Zuführpfads einen Verteilbereich zuzuführen. Dabei weist die Zuführeinrichtung eine erste Transporteinrichtung auf, welche dazu geeignet und bestimmt ist, die Stückgüter entlang des Zuführpfads (insbesondere aktiv) zu bewegen. Unter einer aktiven Fortbewegung wird insbesondere eine von einer Antriebseinrichtung bewirkte Bewegung verstanden, im Gegensatz zu etwa einer Bewegung aufgrund der Schwerkraft.

Weiterhin weist die Vorrichtung eine Abführeinrichtung auf, welche dazu geeignet und bestimmt ist, die Stückgüter wahlweise entlang wenigstens eines ersten Abführpfads oder eines zweiten Abführpfads abzuführen (und/oder sie wahlweise einem ersten Abführpfad oder einem zweiten Abführpfad zuzuführen), wobei die Abführeinrichtung wenigstens eine Transporteinrichtung aufweist, welche dazu geeignet und bestimmt ist, die Stückgüter (insbesondere aktiv) entlang des ersten oder zweiten Abführpfads zu bewegen.

Dabei ist es möglich, dass jedem der Abführpfade eine Transporteinrichtung in Form eines Transportbandes oder einer Transportkette zugeordnet ist, es wäre jedoch auch denkbar, dass beiden Abführpfaden eine gemeinsame Transporteinrichtung, insbesondere in Form eines Transportbandes oder einer Transportkette zugeordnet ist.

Weiterhin weist die Vorrichtung eine erste Verteileinrichtung auf, welche zwischen wenigstens zwei Positionen bewegbar ist, wobei die erste Verteileinrichtung dazu geeignet und bestimmt ist, die Stückgüter bei Anordnung der Verteilereinrichtung in der ersten Position zu dem ersten Abführpfad zu drängen und die Stückgüter bei Anordnung der Verteileinrichtung in der zweiten Position zu dem zweiten Abführpfad zu drängen oder zu führen.

Unter einem Drängen wird verstanden, dass die Stückgütern tatsächlich aktiv in eine Position getrennt werden und sich die Verteileinrichtung daher in der entsprechenden Position nicht nur führend oder neutral verhält.

Bevorzugt bewirkt die Verteileinrichtung bzw. eine Drängfläche derselben daher eine Bewegung der Stückgüter quer und/oder senkrecht zu deren Transportrichtung.

Unter einem Führen wird verstanden, dass die Behältnisse insbesondere nicht senkrecht zu dem Transportpfad gedrängt oder bewegt werden, sie jedoch in einem bestimmten Transportpfad gehalten werden und gerade keine oder allenfalls eine geringe Verschiebung quer zu dem Transportpfad auftreten kann.

Die Erfindung schlägt damit eine Verteileinrichtung vor, welche insbesondere in Abhängigkeit von ihrer Position entweder ein Drängen der Stückgüter in einen der beiden Abführpfade bewirken kann oder aber (insbesondere in der anderen Position) ein Führen der Stückgüter dergestalt, dass sie eine bestimmte Transportrichtung nicht verlassen können (oder aber ebenfalls ein Drängen der Stückgüter in den anderen Transportpfad).

Durch diese Führung wird insbesondere erreicht, dass es auch bei höheren Transportgeschwindigkeiten nicht zu einem Verkeilen von Stückgütern kommt. Es wäre jedoch auch denkbar, dass die Verteileinrichtung je nach Position die Stückgüter in den einen oder den anderen Abführpfad drängt.

Bevorzugt bildet die Transporteinrichtung und/oder die Zuführeinrichtung eine erste Transportgasse auf, innerhalb derer die Stückgüter transportiert werden. So können neben einer Transportkette oder einem Transportband auch zwei (insbesondere stationäre) Seitenwandungen vorgesehen sein, welche diese Transportgasse seitlich begrenzen.

Bevorzugt ist auch auf wenigstens einem Abführpfad und bevorzugt auf beiden Abführpfaden (je) eine Transportgasse ausgebildet, welche besonders bevorzugt jeweils durch seitliche (und insbesondere stationäre) Wandungen begrenzt ist.

Bevorzugt ist genau ein Zuführpfad vorgesehen. Bei einer weiteren bevorzugten Ausführungsformen sind genau zwei Abführpfade vorgesehen. Es wäre jedoch möglich, dass beispielsweise ein Abführpfad selbst wiederum als Zuführpfad wirkt und in zwei oder mehrere Abführpfade verzweigt.

Bei einer besonders bevorzugten Ausführungsform handelt es sich bei der ersten und/oder der zweiten Transporteinrichtung und insbesondere bei der ersten und zweiten Transporteinrichtung um Transportbänder oder Transportketten. Es wäre jedoch auch möglich, dass lediglich eine Transporteinrichtung, insbesondere ein Transportband oder eine Transportkette vorgesehen ist, welche die Stückgüter sowohl im Bereich des Zuführpfads als auch im Bereich des oder der Abführpfade transportiert.

Insbesondere handelt es sich bei den Stückgütern um Behältnisse und insbesondere um befüllte und insbesondere um (mit einem Behältnisverschluss) verschlossene Behältnisse. Es kann sich bei den Stückgütern jedoch auch um Gebinde aus einer Vielzahl von Behältnissen handeln.

Bei den Behältnissen kann es sich insbesondere um Kunststoffbehältnisse oder um Glasbehältnisse handeln.

Bei einer weiteren bevorzugten Ausführungsform weist die Verteileinrichtung eine untere Oberfläche auf, welche bevorzugt oberhalb einer Transportfläche und insbesondere eines Transportbandes oder einer Transportkette angeordnet ist. Unter einer unteren Oberfläche wird eine in vertikaler Richtung nach unten weisende Oberfläche der Verteileinrichtung(en) verstanden.

Besonders bevorzugt berührt dabei diese untere Oberfläche der Verteileinrichtung die Transporteinrichtung und insbesondere ein Transportband oder eine Transportkette nicht. Auf diese Weise wird die Verteileinrichtung nicht durch die Transporteinrichtung in die Transportrichtung der Stückgüter gedrängt.

Besonders bevorzugt handelt es sich bei dieser unteren Oberfläche der Transporteinrichtung um eine ebene Fläche und insbesondere um eine horizontal verlaufende Fläche.

Besonders bevorzugt weist die besagte untere Oberfläche von der Transporteinrichtung und insbesondere dem Transportband oder der Transportkette einen Abstand auf, der größer ist als 1 mm, bevorzugt größer als 2mm, bevorzugt größer als 3 mm, bevorzugt größer als 4 mm. Besonders bevorzugt weist die untere Oberfläche der Verteileinrichtung von der Transporteinrichtung und insbesondere dem Transportband oder der Transportkette einen Abstand auf, der kleiner ist als 10 cm bevorzugt kleiner als 8 cm, bevorzugt kleiner als 6 cm bevorzugt kleiner als 4 cm, bevorzugt kleiner als 3 cm, bevorzugt kleiner als 2 cm und bevorzugt kleiner als 1 cm.

Auf diese Weise kann erreicht werden, dass die Verteileinrichtung nicht durch eine Krafteinrichtungswirkung in der Transportrichtung belastet wird.

Bei einer weiteren bevorzugten Ausführungsformen ist die Verteileinrichtung linear zwischen den beiden Positionen verschiebbar. Insbesondere ist die Verteileinrichtung geradlinig zwischen den beiden Positionen verschiebbar. Es wäre jedoch auch ein Schwenken der Verteileinrichtung um eine vorgegebene Schwenkachse möglich. Dabei könnte es sich insbesondere um eine Schwenkachse handeln, welche in der Nähe einer Spitze einer keilförmigen Verteileinrichtung verläuft.

Bei einer weiteren vorteilhaften Ausführungsform ist in bzw. bei einer Position der Verteileinrichtung eine Transportgasse zum Transport der Stückgüter ausgebildet, welche sich von dem Zuführpfad zu dem ersten oder zweiten Abführpfad der Stückgüter erstreckt und in bzw. bei einer zweiten Position der Verteileinrichtung ist eine Transportgasse zum Transport der Stückgüter ausgebildet, welche sich von dem Zuführpfad zu dem zweiten oder ersten Abführpfad der Stückgüter erstreckt, wobei die Verteileinrichtung in jeder der Positionen wenigstens einen Abschnitt einer Begrenzungswandung dieser jeweiligen Transportgasse ausbildet.

Bevorzugt wird wenigstens eine Transportgasse wenigstens abschnittsweise durch seitliche Wandungen und/oder durch stationäre Wandungen begrenzt. Bei einer weiteren vorteilhaften Ausführungsform wird wenigstens eine Transportgasse wenigstens abschnittsweise durch die Verteileinrichtung begrenzt.

Bei einer weiteren vertrauten Ausführungsformen weist die Zuführeinrichtung wenigstens eine seitliche Begrenzungseinrichtung und insbesondere eine seitliche Begrenzungswand auf, welche eine Bewegung der Stückgüter quer zu dem Transportpfad begrenzt.

Besonders bevorzugt weist die Vorrichtung eine Begrenzungswand (welche den Transportpfad der Stückgüter seitlich begrenzt) auf, welche wenigstens teilweise durch die Verteileinrichtung gebildet ist.

Besonders bevorzugt ist die Transporteinrichtung zwischen einer ersten Behandlungseinrichtung und einer zweiten Behandlungseinrichtung angeordnet, wobei die erste und die zweite Behandlungseinrichtung die Stückgüter und insbesondere Behältnisse in unterschiedlicher Weise behandeln.

Bei einer weiteren bevorzugten Ausführungsformen ist die Verteileinrichtung quer zu der Transportrichtung der Stückgüter zwischen der ersten Position und der zweiten Position bewegbar. Dabei wird unter quer verstanden, dass diese Bewegung nicht in der Transportrichtung erfolgt, sondern in einem vorgegebenen Winkel hierzu.

Besonders bevorzugt ist dieser Winkel größer als 30°, bevorzugt größer als 40°, bevorzugt größer als 50°, bevorzugt größer als 60°, bevorzugt größer als 70° und bevorzugt größer als 80°.

Bei einer weiteren vorteilhaften Ausführungsform weist die erste Verteileinrichtung eine erste Drängfläche auf, welche dazu geeignet und bestimmt ist, die Stückgüter zu dem ersten Abführpfad zu drängen sowie eine zweite Dräng- und/oder Führungsfläche, welche dazu geeignet und bestimmt ist, die Stückgüter zu dem zweiten Abführpfad zu drängen oder sie (auf dem Weg zu dem zweiten Abführpfad) zu führen, wobei die erste Drängfläche und die zweite Dräng- oder Führungsfläche wenigstens abschnittsweise voneinander beanstandet sind.

Bevorzugt erstreckt sich die erste Drängfläche schräg gegenüber einem Bewegungspfad der Stückgüter, welchen diese bei Abwesenheit der Verteileinrichtung einnehmen würden.

Es wird bei dieser Ausführungsform vorgeschlagen, dass ein Drängen der Stückgüter in den ersten Abführpfad als auch ein Drängen der Stückgüter in den zweiten Abführpfad oder ein Führen der Stückgüter in Richtung des zweiten Abführpfads durch die gleiche Verteileinrichtung und insbesondere unterschiedliche Flächen dieser Verteilereinrichtung erfolgt.

Bei einer weiteren bevorzugten Ausführungsformen erstreckt sich wenigstens eine Drängfläche in wenigstens einer Position der Verteileinrichtung schräg zu dem Transportpfad (gedachten und nicht durch die Verteileinrichtung beeinflussten Transportpfad) der Stückgüter. Besonders bevorzugt erstreckt sich die zweite Dräng- und/oder Führungsfläche in der zweiten Position parallel zum Transportpfad der Stückgüter es wäre jedoch auch denkbar, dass sich die zweite Dräng- oder Führungsfläche in der zweiten Position der Verteileinrichtung ebenfalls schräg zu dem (gedachten) Transportpfad (der nicht durch die Verteileinrichtung beeinflussten) Stückgüter erstreckt.

Es wird daher vorgeschlagen, dass die oder jede Dräng- oder Führungsfläche je nach Position der Verteileinrichtung auch als gewöhnliche Führungsfläche wirkt, welche kein Drängen der Stückgütern bewirkt, sondern, dass diese in einer bestimmten Transportbahn gehalten werden. Unter einer Drängfläche wird verstanden, dass dies bewirkt, dass die Stückgüter aktiv, insbesondere quer zu dem Transport gedrängt oder bewegt werden.

Bei einer bevorzugten Ausführungsformen ist die Drängfläche beschichtet, insbesondere um einen Reibungswiderstand mit den transportierten Stückgütern zu reduzieren. Besonders bevorzugt ist die Drängfläche von der Vorrichtung und/oder der Verteileinrichtung auswechselbar.

Besonders bevorzugt handelt es sich bei den oben beschriebenen Positionen um Positionen der Verteileinrichtung. Bevorzugt sind diese Positionen oder ist wenigstens eine der Positionen einstellbar, um so beispielsweise eine Anpassung auf unterschiedliche Stückgüter und insbesondere unterschiedliche Behältnisse, und insbesondere Flaschen zu erreichen.

Bei einer weiteren bevorzugten Ausführungsformen ist die erste Drängfläche dazu geeignet und bestimmt, die Stückgüter in den ersten Abführpfad (oder in Richtung des ersten Abführpfads) zu drängen, wenn die Verteileinrichtung in der ersten Position angeordnet ist. Die zweite Dräng- oder Führungsfläche ist vorteilhaft dazu geeignet und bestimmt, die Stückgütern in den zweiten Abführpfad zu drängen oder zu dem zweiten Abführpfad zu führen, wenn die Verteileinrichtung in der zweiten Position angeordnet ist.

Bei einer weiteren bevorzugten Ausführungsformen wirkt wenigstens eine Drängfläche und insbesondere die zweite Dräng- und/oder Führungsfläche in einer Position der Verteileinrichtung als Führungsfläche.

Bei einer weiteren vorzuwerfen Ausführungsform erhöht sich ein Abstand zwischen der ersten Drängfläche und der zweiten Dräng- oder Führungsfläche in der Transportrichtung der Stückgüter. Besonders bevorzugt ist die Verteileinrichtung keilförmig ausgebildet.

Besonders bevorzugt ist ein maximaler Abstand zwischen der ersten Drängfläche und der zweite Dräng- und/oder Führungsfläche geringer als eine Länge der Verteileinrichtung. Besonders bevorzugt ist ein maximaler Abstand zwischen der ersten Drängfläche und der zweiten Dräng- und/oder Führungsfläche größer als 2 cm, bevorzugt größer als 3 cm, bevorzugt größer als 4 cm, bevorzugt größer als 5 cm, bevorzugt größer als 6 cm und besonders bevorzugt größer 10 cm.

Besonders bevorzugt ist ein maximaler Abstand zwischen der ersten Drängfläche und der zweiten Dräng- und/oder Führungsfläche kleiner als 40 cm, bevorzugt kleiner als 35 cm bevorzugt kleiner als 30 cm, bevorzugt kleiner als 25 cm und besonders bevorzugt kleiner als 20 cm.

Bevorzugt verlaufen die Drängfläche und die Dräng- und/oder Führungsfläche entgegen der Transportrichtung der Stückgüter aufeinander zu.

Die Erfindung erlaubt eine Verteilung von Behältnissen oder Behältnispulks auf zwei Bahnen. Die Verteileinrichtung, bei der sich insbesondere um eine Keilsegmentweiche handelt, ist bevorzugt so gestaltet, dass in beide Richtungen nach dem Schalten des oder der einzelnen Segmente bzw. Verteileinrichtungen eine beidseitig (im Wesentlichen) durchgehende Gassenführung vorhanden ist. Unter im Wesentlichen durchgehend wird dabei verstanden, dass eventuell verbleibende Lücken in der Gassenführung kleiner sind als ein Durchmesser der zu transportierenden Behältnisse, bevorzugt kleiner als die Hälfte dieses Durchmessers und besonders bevorzugt kleiner als ein Vierteil dieses Durchmessers.

Die Verteileinrichtung bzw. Keilsegmentweiche weist bevorzugt wenigstens zwei Segmente auf. Dies bedeutet, dass bevorzugt wenigstens zwei Verteileinrichtungen insbesondere hintereinander in der Transporteinrichtung der Stückgüter angeordnet sind. Bevorzugt bewirken jedoch diese beiden Verteileinrichtungen gemeinsam die Verteilung der Stückgüter auf den einen oder den anderen Abführpfad.

Zum Schalten (bzw. Bewegen) dieser Verteileinrichtungen ist insbesondere eine Lücke im Behältnissstrom erforderlich. Besonders bevorzugt weist daher die Vorrichtung eine Lückenerzeugungseinrichtung auf, welche dazu geeignet und bestimmt ist, in einem Behältnisstrom eine Lücke zu erzeugen. Beispielsweise kann es sich der Lückenerzeugungseinrichtung um eine Halteeinrichtungen handeln, welche kurzzeitig transportierte Behältnisse (und auch dahinterliegende Behältnisse anhält). Bevorzugt ist diese Lückenerzeugungseinrichtung dazu geeignet und bestimmt, Lücken unterschiedlicher Größe zu erzeugen.

Besonders bevorzugt ist die Lückenerzeugungseinrichtung in einer Transportrichtung der Stückgüter vor der Verteileinrichtung und/oder vor dem Verteilbereich angeordnet.

Besonders bevorzugt weist die Vorrichtung eine Steuerungseinrichtung auf, welche dazu geeignet und bestimmt ist, eine Bewegung der Verteileinrichtung zwischen der ersten Position und der zweiten Position unter Berücksichtigung einer Aktivierung der Lückenerzeugungseinrichtung und/oder in Abhängigkeit von einer Position einer erzeugten Lücke zu steuern.

Bevorzugt ist diese Steuerungseinrichtung auch dazu geeignet und bestimmt, bei der Steuerung der Bewegung der Verteileinrichtung eine Transportgeschwindigkeit der transportierten Stückgüter und insbesondere Behältnisse zu berücksichtigen. Bevorzugt ist die Steuerungseinrichtung dazu geeignet und bestimmt, eine Bewegung der Verteileinrichtung(en) in Abhängigkeit von der Größe und/oder "Transportgeschwindigkeit" der Lücke zu steuern.

So ist es beispielsweise möglich, dass die Lückenerzeugungseinrichtung den Weitertransport eines Stückguts und auch der nachfolgenden Stückgüter sperrt und sich auf diese Weise eine sich vergrößernde Lücke zu den noch weiter transportierten Stückgütern ergibt. Sobald diese Lücke die (erste) Verteileinrichtung erreicht hat, kann diese in die jeweils andere Position verschoben werden.

Bevorzugt ist die Steuerungseinrichtung dazu geeignet und bestimmt, die Verteileinrichtung und/oder die Lückenerzeugungseinrichtung dergestalt zu steuern, dass eine minimale Lücke erzeugt wird und/oder eine Lücke, die noch ein sicheres Bewegen der Verteileinrichtung(en) ermöglicht.

Je mehr Segmente die Verteileinrichtung aufweist bzw. je mehr Verteileinrichtungen vorhanden sind, desto kürzer ist die erforderliche Lücke zum Schalten der einzelnen Segmente bzw. Verteileinrichtungen.

Bei einer weiteren vorteilhaften Ausführungsformen weist die Vorrichtung eine Antriebseinrichtung auf, welche dazu geeignet und bestimmt ist, die Verteileinrichtung zwischen der ersten Position und der zweiten Position zu bewegen, wobei bevorzugt diese Antriebseinrichtung wenigstens teilweise (und bevorzugt vollständig) oberhalb oder unterhalb der Transporteinrichtungen angeordnet ist.

Besonders bevorzugt ist diese Antriebseinrichtung oberhalb oder unterhalb des Transportpfades der Behältnisse angeordnet und besonders bevorzugt oberhalb des Transportpfades.

Auf diese Weise wird eine Bewegung der Stückgüter und insbesondere Behältnisse nicht durch die Antriebseinrichtung gestört.

Bevorzugt handelt es sich bei der Antriebseinrichtung um eine elektrische oder eine pneumatische Antriebseinrichtung. Insbesondere handelt es sich bei Antriebseinrichtung um einen insbesondere positionsgesteuerten Linearmotor oder die Antriebseinrichtung weist einen Linearmotor auf. Bevorzugt weist die Antriebseinrichtung einen Schlitten auf, der insbesondere geradlinig gegenüber einer Führungseinrichtung bewegbar ist und insbesondere zwischen zwei Endposition bewegbar ist.

Diese Endpositionen sind bevorzugt bei Verarbeitung von unterschiedlichen Behälterdurchmessern anpassbar und/oder verstellbar. Bevorzugt sind jedoch, insbesondere durch das Vorsehen eines Elektromotors und insbesondere eines Linearmotors keine mechanischen Umbaumaßnahmen nötig um diese Anpassung zu erreichen.

Die Positionen sind bevorzugt über ein Steuerungsmittel, beispielsweise einen Flaschenwahlschalter und/oder ein Produktionsrezept bestimmbar. Es wäre jedoch auch eine vollautomatisch Umstellung denkbar, etwa wenn die Vorrichtung ein neues Behältnisformat erfasst und in Reaktion auf dieses neue Behältnisformat die entsprechenden Einstellungen vornimmt oder ändert.

Bei einer bevorzugten Ausführungsform ist/sind wenigstens eine der Positionen und bevorzugt beide Positionen (P1, P2) einstellbar. Bevorzugt ist diese Einstellung halbautomatisiert oder automatisiert durchführbar. Dies bedeutet insbesondere, dass keine mechanischen Umbauarbeiten durchgeführt werden müssen sondern beispielsweise mittels einer Antriebseinrichtung diese Positionen einstellbar sind. Auch wäre es möglich, diese Positionen durch Einstellungen an der Antriebseinrichtung wie etwa einem Linearmotor zu ändern. So können etwa mittels einer Steuerungseinrichtung die Endpositionen geändert werden.

Auch können bevorzugt weitere Parameter, wie etwa eine Gassenweite der Transportgasse(n) automatisiert eingestellt werden.

Bei einer weiteren bevorzugten Ausführungsformen weist die Antriebseinrichtung ein Gestänge auf, welches insbesondere vertikal nach oben zu der eigentlichen Antriebseinrichtung ragt und/oder welches die Verteileinrichtung mit dem oben beschriebenen Schlitten verbindet.

Bei einer weiteren bevorzugten Ausführungsformen ist die Verteileinrichtung drehfest an der Antriebseinrichtung angeordnet.

Bei einer weiteren bevorzugten Ausführungsformen ist die Antriebseinrichtung bevorzugt vollständig oberhalb der Verteileinrichtung angeordnet.

Bei einer weiteren vorteilhaften Ausführungsform weist die Vorrichtung eine zweite Verteileinrichtung auf, welche in der Transportrichtung der Stückgütern vor oder insbesondere nach der ersten Verteileinrichtung angeordnet ist, wobei auch diese zweite Verteileinrichtung zwischen einer ersten Position und einer zweiten Position bewegbar ist.

Bevorzugt schließt sich diese zweite Verteileinrichtung unmittelbar in der Transportrichtung der Stückgüter an die erste Verteileinrichtung an. Besonders bevorzugt ist eine Bewegung dieser zweiten Verteileinrichtung unabhängig von einer Bewegung der ersten Verteileinrichtung steuerbar.

Besonders bevorzugt weist die zweite Verteileinrichtung ebenfalls eine keilförmige Gestalt auf. Besonders bevorzugt ist eine Gestalt der zweiten Verteileinrichtung derart ausgebildet, dass auch die erste und zweite Verteileinrichtung gemeinsam eine keilförmige Gestalt ausbilden.

Besonders bevorzugt weist auch diese zweite Verteileinrichtung eine erste Drängfläche und eine zweite Dräng- und/oder Führungsfläche auf.

Bei der weiteren bevorzugten Ausführungsformen weist die Vorrichtung eine dritte Verteileinrichtung auf, welche dazu geeignet und bestimmt ist, die Stückgütern wahlweise in den ersten oder den zweiten Abführpfad zu drängen und/oder zu führen.

Bei einer weiteren vorteilhaften Ausführungsform weist die Vorrichtung wenigstens drei und bevorzugt wenigstens vier Verteileinrichtungen auf, welche bevorzugt in der Transportrichtung der Stückgüter hintereinander angeordnet sind oder welche bevorzugt wenigstens zeitweise wenigstens eine durchgehende Drängfläche ausbilden.

Besonders bevorzugt ist die Antriebseinrichtung unmittelbar mit der Verteileinrichtung in mechanischer Verbindung. Es wäre doch auch möglich, dass zwischen der Antriebseinrichtung wie etwa einen Linearmotor und der Verteileinrichtung ein mechanisches Element wie insbesondere ein Kniehebel vorgesehen ist, um die Schaltzeit zu reduzieren. So kann beispielsweise an jeder Verteileinrichtung und/oder an jedem Segment ein solcher Kniehebel(mechanismus) angreifen.

Es wäre jedoch auch möglich, die Antriebseinrichtung als Zahnriemenantrieb oder Spindelantrieb vorzusehen. Dabei könnte auch ein Spindelantrieb mit einer Schnellsteigung vorgesehen sein.

Weiterhin sind unterschiedliche Aufstellungsvarianten möglich, in welchen die Verteileinrichtung eingesetzt werden kann. So ist beispielsweise eine "Y -Aufstellung" möglich. Hierbei sind mehrere parallele Transportspuren vorgesehen. Daneben ist auch eine h-Aufstellung möglich. Dabei sind mehrere parallele Transportbandspuren vorgesehen. Daneben ist auch eine h-Aufstellung für kleine Unterschiede im Behälterdurchmesser der einzelnen Behältersorten denkbar. Daneben ist es auch möglich, dass zwei Transportbandspuren vorgesehen sind. Dies wird untenstehend unter Bezugnahme auf die Figuren erläutert.

Aufgrund der hier vorgeschlagenen beidseitigen Gassenführung kann es in einem Weichenbereich zu keinen Verkeilungen kommen. So können beispielsweise liegende Behältnisse sicher durch den Weichenbereich fahren. Bei allen beschriebenen Varianten ergibt sich, dass bei einem kleinen Behältnisdurchmesser (bis beispielsweise 73 mm Durchmesser) und einer hohen Anlagenleistung eine nur kleine Verstellung der einzelnen Verteileinrichtungen bzw. Segmente möglich ist. D. h. hier kann auch bei einem kurzen Verstellhub eine hohe Anlagenleistung erreicht werden.

Bei großen Behältnisdurchmessern (insbesondere ab 73 mm und bis 122 mm und geringen Anlagenleistungen ist ein größerer Verstellhub möglich bzw. nötig. In diesem Fall ergibt sich eine geringere Anlagenleistung, allerdings ein größerer Verstellhub.

Es ist jeweils möglich, die Verteileinrichtung analog zu der Gassenführung oder zur Durchführung der Abführpfade zu gestalten. Es sind keine Gerüstteile nötig.

Die vorliegende Erfindung bezieht sich weiterhin auf ein Verfahren zum Transportieren von Stückgütern und insbesondere von Behältnissen oder Gebinden, wobei eine Zufuhreinrichtung die Stückgüter entlang wenigstens und bevorzugt genau eines ersten Zuführpfads zu einem Verteilerbereich zuführt, wobei diese Zuführeinrichtung eine erste Transporteinrichtung aufweist, welche die Stückgüter -insbesondere aktiv- entlang des Zuführpfads fortbewegt und wobei wenigstens eine Abführeinrichtung die Stückgüter wahlweise entlang wenigstens eines ersten Abführpfads oder eines zweiten Abführpfads abführt, wobei die Abführeinrichtung wenigstens eine Transporteinrichtung aufweist, welche die Stückgüter entlang des ersten oder zweiten Abführpfads -insbesondere aktiv- bewegt, wobei die Vorrichtung eine erste Verteileinrichtung aufweist, welche zwischen wenigstens zwei Positionen bewegt wird, wobei die erste Verteileinrichtung die Stückgüter bei Anordnung der Verteileinrichtung der ersten Position zu dem ersten Abführpfad drängt und die Stückgütern bei Anordnung der ersten Verteileinrichtung in der zweiten Position zu dem zweiten Abführpfad drängt oder führt.

Besonders bevorzugt werden die Behältnisse vereinzelt transportiert. Besonders bevorzugt werden die Behältnisse an ihrem Boden gestützt und -insbesondere aktiv-, beispielsweise von einem Transportband oder einer Transportkette transportiert und/oder bewegt.

Bei einem weiteren vorteilhaften Verfahren wird eine zweite Verteileinrichtung ebenfalls zwischen einer ersten Position und einer zweiten Position bewegt, wobei die Bewegung der zweiten Verteileinrichtung unabhängig von der Bewegung der ersten Verteileinrichtung durchgeführt wird und/oder die Bewegung der zweiten Verteileinrichtung nicht an die Bewegung der ersten Verteileinrichtung gekoppelt ist.

Bevorzugt weist auch die zweite Verteileinrichtung eine erste Drängfläche auf und eine zweite Dräng- und/oder Führungsfläche, welche insbesondere die gleiche Funktion wahrnehmen wie die entsprechenden Flächen der ersten Verteileinrichtung.

Besonders bevorzugt sind die erste und die zweite Verteileinrichtung in der Transportrichtung der Stückgüter unmittelbar hintereinander angeordnet.

Besonders bevorzugt wird ein Stückgüterstrom wenigstens zeitweise unterbrochen, insbesondere um die Bewegung der wenigstens einen Verteileinrichtung durchzuführen.

Besonders bevorzugt werden die Behältnisse quer zu der Transporteinrichtung oder den Transporteinrichtungen geführt und oder gedrängt.

Weitere Vorteile und Ausführungsformen ergeben sich aus den beigefügten Zeichnungen:

### Darin zeigen:

- Fig. 1a,b: zwei Darstellungen einer Vorrichtung nach dem Stand der Technik;
- Fig. 2: eine schematische Darstellung einer erfindungsgemäßen Vorrichtung in einer ersten Ausführungsform;
- Fig. 3: eine Darstellung der vorliegenden Erfindung in einer zweiten Ausführungsform;
- Fig. 4a-4f: Darstellungen eines erfindungsgemäßen Verfahrens;
- Fig. 5: eine Darstellung zur Veranschaulichung der Verteileinrichtung;
- Fig. 6a,b: eine Darstellung einer Verteilereinrichtung in einer weiteren Ausführungsform;
- Fig. 7a,b: eine Darstellung der Verteilereinrichtung in einer weiteren Ausführungsform;
- Fig. 8a,b: zwei Darstellungen zur Veranschaulichung der Erfindung;
- Fig. 9a,b: zwei Darstellungen der Erfindung in einer weiteren Ausführungsform;
- Fig. 10: eine weitere Darstellung der vorliegenden Erfindung;
- Fig. 11a,b: Darstellungen zur Veranschaulichung der vorliegenden Erfindung;
- Fig. 12a,b: zwei weitere Darstellungen zur Veranschaulichung der Erfindung;
- Fig. 13: eine perspektivische Ansicht der erfindungsgemäßen Vorrichtung;
- Fig. 14a,b: zwei Darstellungen einer Antriebseinrichtung für die vorliegende Vorrichtung;
- Fig. 15a,b: weitere Darstellungen einer Antriebseinrichtung;
- Fig. 16: eine weitere Ausgestaltung einer Antriebseinrichtung;
- Fig. 17: eine weitere Ausgestaltung der Antriebseinrichtung; und
- Fig. 18: eine Draufsicht auf die erfindungsgemäße Vorrichtung.

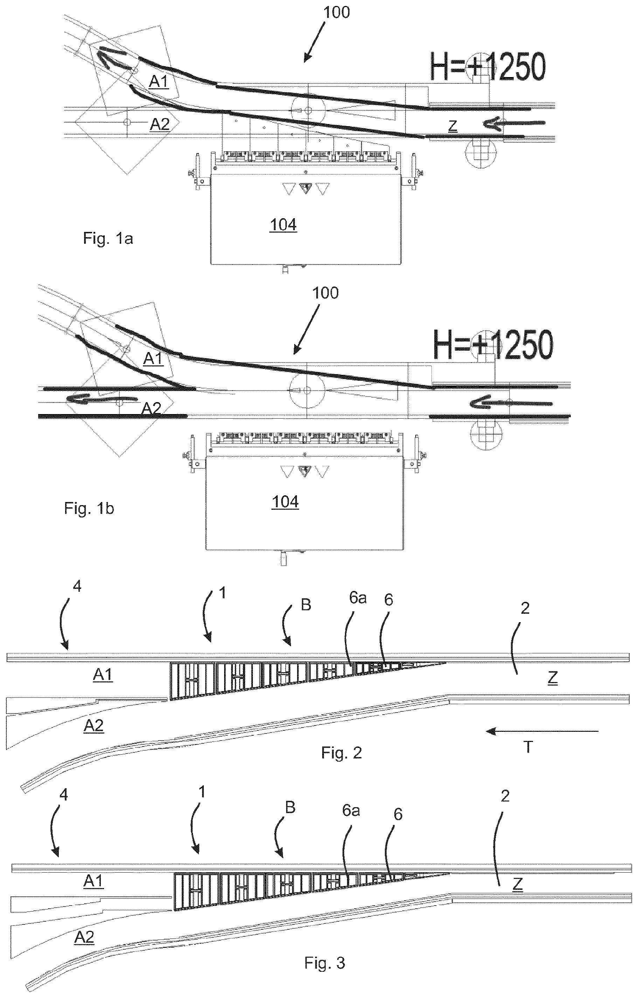

Fig. 1a zeigt eine Vorrichtung zum Transportieren nach dem Stand der Technik. Dabei ist ein Zuführbereich Z vorgesehen, in dem Behältnisse einem Verteilbereich zugeführt werden. In diesem Teilbereich können die Behältnisse auf zwei Abführpfade A1 und A2 ausgeleitet werden. Zu diesem Zweck ist eine Verteileinrichtung 104 vorgesehen, welche bei der in Fig. eins gezeigten Darstellung so positioniert ist, dass die Behältnisse in Richtung des ersten Abführpfads A1 gelenkt werden. Bei der in Figur 1b gezeigten Situation werden die Behältnisse in Richtung des zweiten Abführpfads A2 geführt.

Man erkennt, dass bei der in Figur 1b gezeigten Situation die Verteileinrichtung nicht aktiv bzw. zurückgestellt ist. Daher kann es jedoch dazu kommen, dass zwischen den beiden Abführpfaden A1 und A2 Behältnisse ungewollt die Position wechseln können und sich beispielsweise in dem Abführpfad verkeilen können.

Man erkennt, weiterhin, dass die Verteileinrichtung hier neben dem Transportpfad der Behältnisse angeordnet ist, auf diese Weise weisen die einzelnen Verteilsegmente lediglich eine Oberfläche auf, welche zum Leiten der Behältnisse dient.

Fig. 2 zeigt eine schematische Darstellung einer erfindungsgemäßen Vorrichtung. Dabei ist wieder ein Zuführbereich Z vorgesehen, welche ein Transportband aufweisen kann und welches stehende Stückgüter und insbesondere Behältnisse hier (In Richtung des Pfeils T) von rechts nach links fördert.

Die Stückgüter (nicht gezeigt) können in den ersten Abführpfad A1 oder in den zweiten Abführpfad A2 transportiert werden.

Zu diesem Zweck sind hier mehrere Verteileinrichtungen 6,6a vorgesehen, welche bei der in Fig. 2 gezeigten Situation so positioniert sind, dass die Stückgüter bzw. Behältnisse in Richtung des zweiten Abführpfads A2 gelenkt werden. Damit werden hier die Behältnisse in einer Transportgasse transportiert, welche einerseits durch seitliche Wandungen begrenzt wird, andererseits jedoch abschnittsweise auch durch die einzelnen Verteileinrichtungen.

Dabei ist bevorzugt dieser Abführpfad seitlich vollständig geschlossen. Wenn die einzelnen Verteileinrichtungen 6,6a, ... aber jeweils (in der Figur) nach unten zugestellt sind, werden die Behältnisse geradlinig in Richtung des ersten Abführpfads A1 gefördert. In diesem Falle erstreckt sich eine entsprechende Transportgasse geradlinig von rechts nach links. Auch in diesem Fall wird jedoch ein Abschnitt dieser Transportgasse abschnittsweise durch die Verteileinrichtungen 6, 6a, ... ausgebildet.

Fig. 3 zeigt eine ähnliche Situation wie diejenige in Fig. 2, allerdings werden hier Behältnisse mit einem geringeren Querschnitt verarbeitet bzw. transportiert. Das Bezugszeichen B kennzeichnet den Verteilbereich, in dem die Verteilung auf die beiden Abführpfade A1 und A2 erfolgt.

Bevorzugt weist die Vorrichtung eine Einstelleinrichtung auf, mittels derer eine Einstellung auf unterschiedliche Behältnisdurchmesser erfolgen kann. So können beispielsweise die jeweiligen Gassenweiten für unterschiedliche Behältnisdurchmesser geändert werden. Es ist dabei sowohl eine manuelle Einstellung als auch eine automatisierte Einstellung möglich.

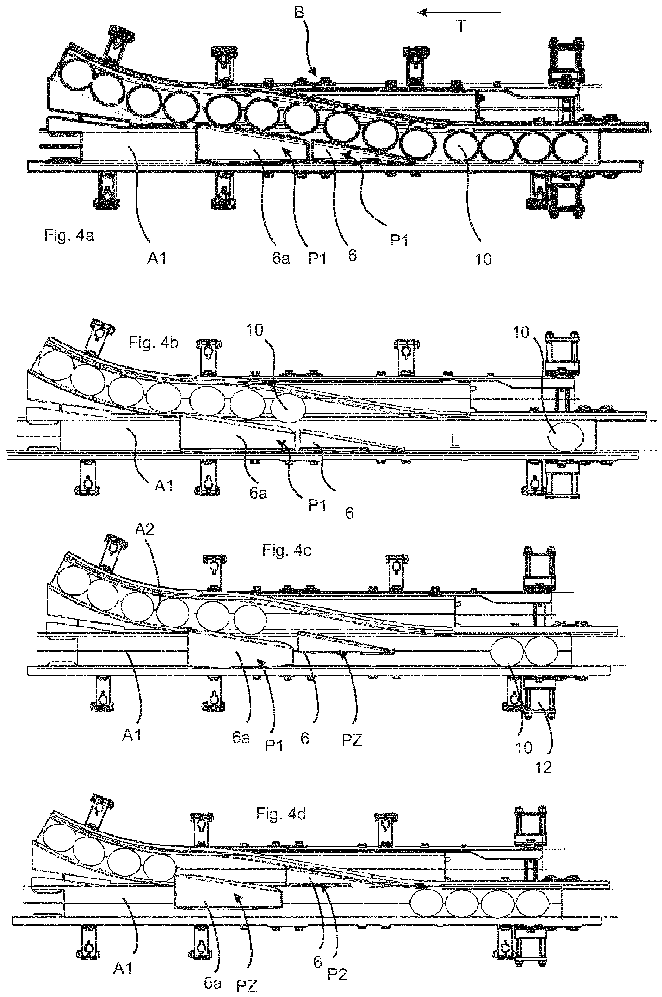

Die Fig. 4a bis 4f veranschaulichen ein erfindungsgemäßes Verfahren.

Bei der in Fig. 4a angezeigten Situation werden Stückgüter und in diesem Fall Behältnisse 10 in einen Abführbereich A2 gefördert. Zu diesem Zweck erkennt man, dass Transportbänder vorgesehen sind, welche die Behältnisse hier wiederum von rechts nach links fördern.

Die Bezugszeichen 6 und 6a kennzeichnen zwei Verteileinrichtungen, welche in einem Verteilbereich B angeordnet sind. Beide Verteileinrichtungen befinden sich hier in einer Position P1, in der eine Förderung der Behältnisse in den Abführbereich A2 bewirkt wird.

Bei der in Fig. 4b gezeigten Situation F wird eine Lücke L zwischen den transportierten Behältnissen 10 erzeugt. Die Verteileinrichtungen 6 und 6a befinden sich hierbei noch in der unteren Position, d. h. der Position P1.

Bei der in Fig. 4c gezeigten Situation wird die Verteilereinrichtung 6 (bezogen auf die Figur) nach oben, d.h. in Richtung der zweiten Position P2 geschoben, bzw. bewegt, d. h. sie befindet sich in Figur 4c gerade in einer Zwischenposition PZ, wird jedoch nach oben in die Position P2 bewegt. Die Verteileinrichtung 6 sollte diese Position erreicht haben, bevor die nächsten Behältnisse bei ihr ankommen.

Bei der in Fig. 4d gezeigten Situation ist die Verteileinrichtung 6 bereits in der oberen bzw. zweiten Position P2 und die zweite Verteileinrichtung 6a befindet sich in einer Zwischenposition. Dies ist in dieser Situation möglich, da auch die Verteileinrichtung 6a (noch) keine Behältnisse leitet bzw. drängt.

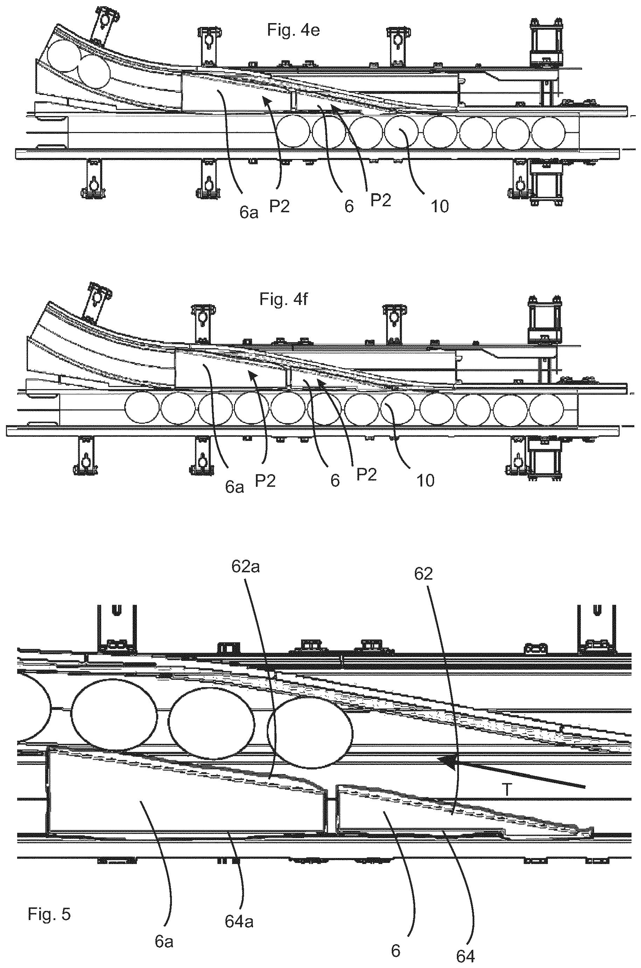

Bei der in Figur Fig. 4e gezeigten Situation sind beide Verteileinrichtungen 6 und 6a in der oberen Position P2. Die Behältnisse werden nunmehr geradlinig von rechts nach links in den Abführpfad bzw. Abführbereich A1 transportiert. In Figur 4f ist gezeigt, dass nunmehr alle Behältnisse in den Abführpfad bzw. Abführbereich A1 aber eins transportiert werden.

Fig. 5 zeigt eine detaillierte Darstellung der Verteileinrichtungen 6 und 6a. Dabei weist die erste Verteileinrichtung 6 eine erste Drängfläche 62 und eine zweite Dräng- und/oder Führungsfläche 64 auf (die jedoch in der in Fig, 5 gezeigten Ausgestaltung als Führungsfläche wirkt). Die zweite Verteileinrichtung 6a weist eine erste Drängfläche 62a und eine zweite Dräng- und/oder Führungsfläche 64a auf.

Die Drängflächen 62 und 64 einerseits sowie die Dräng- und Führungsflächen 62a und 64a andererseits sind dabei voneinander beabstandet. Dabei vergrößert sich ein Abstand dieser Flächen in der Transportrichtung T, d. h. hier von rechts nach links. Damit sind insgesamt beide Verteileinrichtungen 6 und 6a keilförmig ausgebildet und bilden hier gemeinsam eine Drängfläche aus, welche bei der in Fig. 5 gezeigten Situation die Stückgüter zu dem Abführpfad A2 fördert.

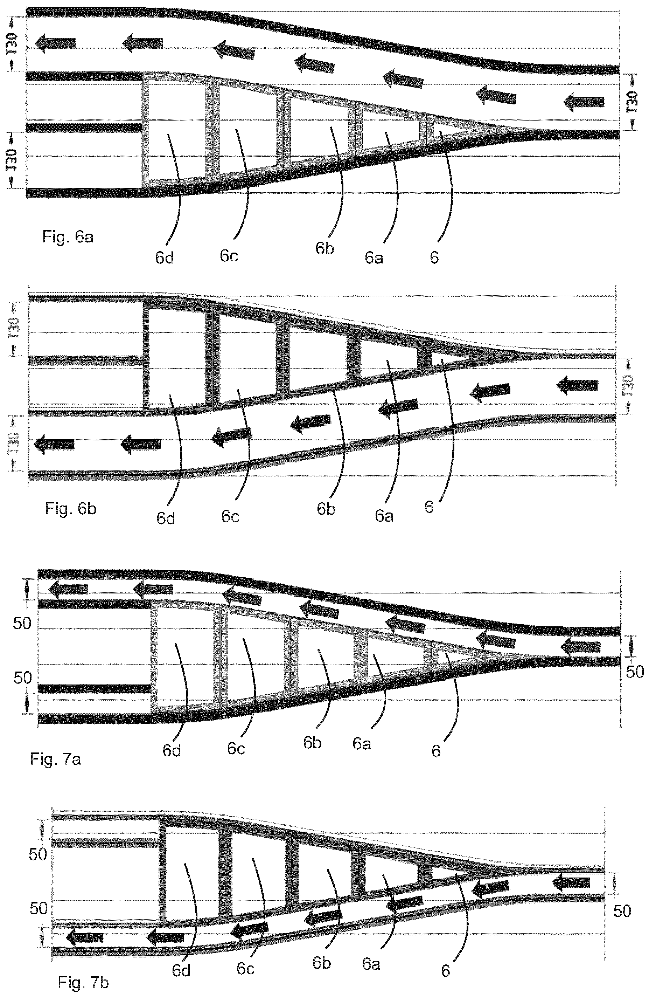

Fig. 6a zeigt eine weitere Darstellung der erfindungsgemäßen Vorrichtung. Hier sind insgesamt fünf Verteileinrichtungen 6,6a, 6b, 6c und 6d vorgesehen, die ebenfalls jeweils zwischen zwei Positionen verschiebbar sind. Bei der in Fig. 6a gezeigten Situation werden die Behältnisse in den zweiten Abführpfad A2 geleitet bzw. gedrängt. Wenn die einzelnen Verteileinrichtungen in die obere Position gefahren werden (vgl. Fig. 6b), werden die Behältnisse in den ersten Abführpfad A1 geleitet, genauer gedrängt. Bei der in Fig. 6a,b gezeigten Situation wirken zwei Flächen der einzelnen Verteileinrichtungen jeweils als Drängflächen, weil sie die einzelnen Behältnisse auch quer zu der Transportrichtung bewegen bzw. drängen.

Die Vorrichtung aus 6a,b ist geeignet zum Transportieren von vergleichsweise großen Behältnissen und weist hier eine Gassenbreite von 130 mm auf.

Bei der in den Fig. 7a,b gezeigten Situation können Behältnisse mit einem relativ geringen Durchmesser, hier einem Durchmesser von 50 mm transportiert werden.

Die Figuren 6b und 7b zeigen jeweils die Situationen, bei denen die Verteileinrichtungen in der oberen Position sind und damit die Behältnisse zu den zweiten Abführpfaden A2 transportiert werden.

Damit können die Figuren 6a,b und 7a,b gezeigten Darstellungen jeweils als eine Y Ausführung bezeichnet werden, da das Gesamtbild der Zu- und Abführpfade eine Y - artige Struktur aufweist.

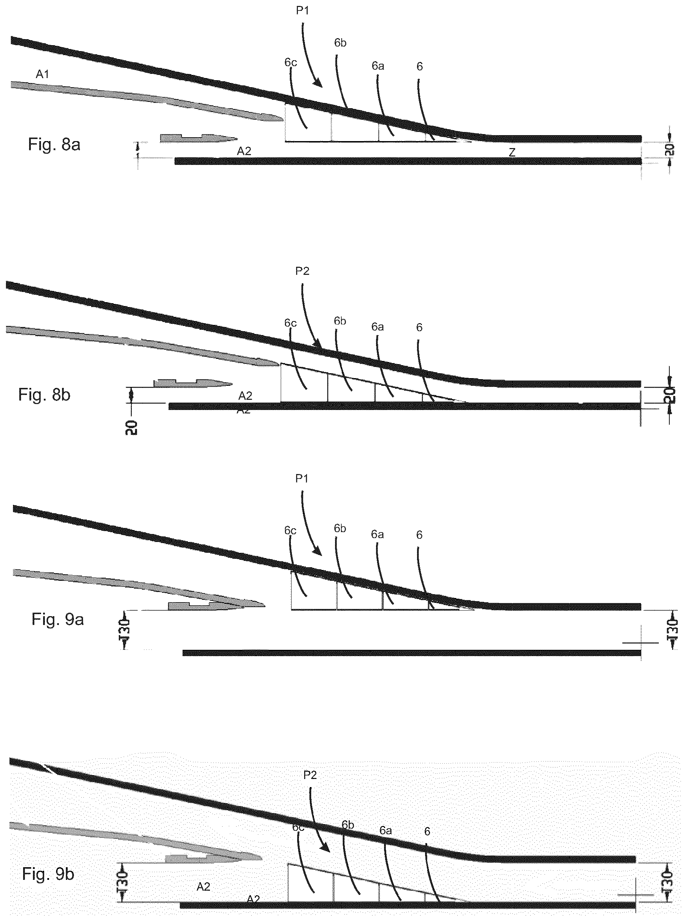

Bei der in Figuren 8a,b und 9a,bgezeigten Situation ist jeweils eine h-artige Ausführung vorgesehen, bei der der erste Abführpfad A1 abzweigt und der zweite Abführpfad A2 durchgehend geradlinig verläuft. Auch hier sind wieder in den Figuren 8a und 8b die Darstellungen für ein Behältnis mit kleinerem Querschnitt gezeigt und in den Figuren 9a und 9b jeweils die Situation für ein Behältnis mit einem größeren Querschnitt.

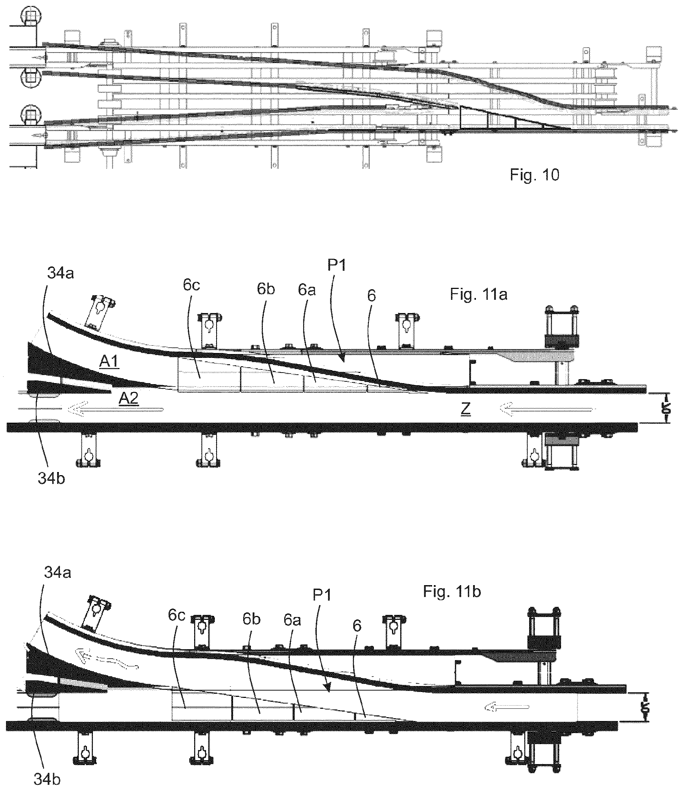

Fig. 10 zeigt eine Situation, bei der mehrere parallele Transportband - Spuren vorgesehen sind. Hier sind vergleichsweise flache Führungen bzw. Kurven vorgesehen.

Die Figuren 11a und 11b zeigen ein Beispiel für eine Gassenweite von 70 mm, bei der jeweils der erste Abführpfad A1 nach oben und gekrümmt abweicht. Bei der in Fig. 11a gezeigten Situation werden die Behältnisse in den zweiten Abführpfad A2 geleitet und bei der in Figur 11b gezeigten Situation werden die Behältnisse in den ersten Abführpfad A1 geleitet.

Es ist weiterhin möglich, bei der in den Figuren 11a und 11b gezeigten Situation die Gassenweite beidseitig zu verstellen. Zu diesem Zweck sind bevorzugt Stelleinrichtungen vorgesehen.

Man erkennt weiterhin in den Fig. 11a und 11b jeweils eine zwei stationäre Keile 34a und 34b die bei der in Fig. 11a und 11b gezeigten Situation maximal voneinander beanstandet sind.

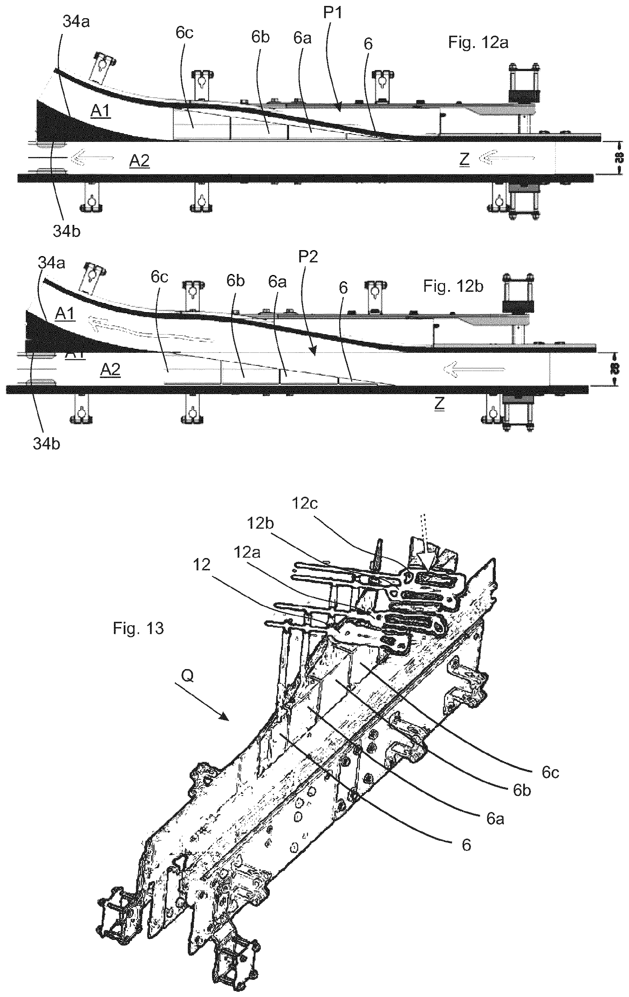

In den Fig. 12a,b ist eine ähnliche Situation dargestellt, wobei jedoch ein minimaler Abstand zwischen den stationären Keilen 34a, 34b besteht. Auf diese Weise kann bei der in Figur 12a,b gezeigten Situation die Gassenbreite von 70 auf 85 mm erhöht werden.

Fig. 13 zeigt eine perspektivische Darstellung der erfindungsgemäßen Vorrichtung. Dabei sind hier vier Verteileinrichtungen 6, 6a, 6b, 6c vorgesehen. Daneben sind jeweils die Antriebseinrichtungen 12, 12a, 12b und 12c vorgesehen, welche hier oberhalb des Transportpfads der Behältnisse angeordnet sind und welche die Verschiebungen der Verteileinrichtungen hier quer, d. h. in der Richtung Q zwischen den Positionen P1 und P2 bewirken.

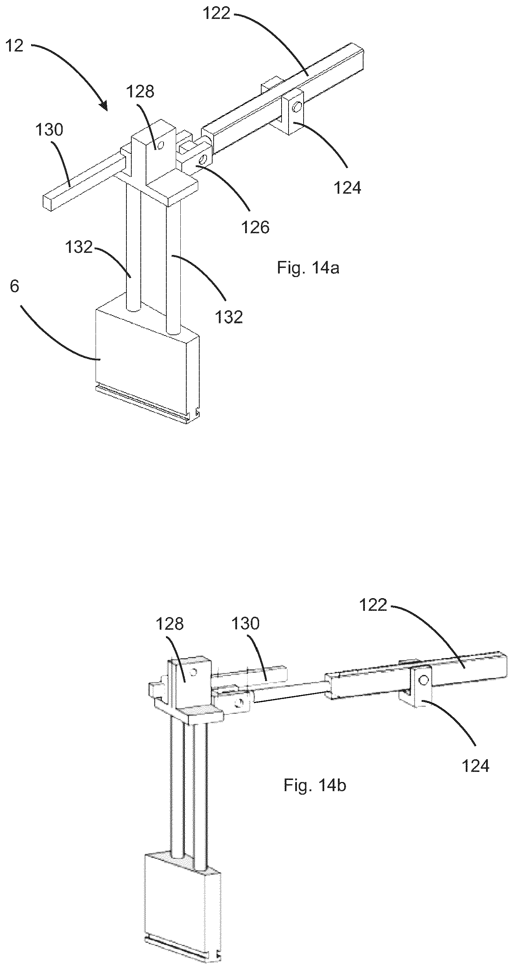

Die Figuren 14a und 14b zeigen jeweils eine Antriebseinrichtung. Dabei ist die Verteilereinrichtung 6 dargestellt, die hier von einem Gestänge 132 (insbesondere drehfest) gehalten wird. Das Bezugszeichen 128 kennzeichnet einen Schlitten, der bezüglich einer Führungsstange 130 gleiten kann.

Das Bezugszeichen 122 kennzeichnet eine Antriebseinrichtung insbesondere einen Linearmotor. Dieser ist mittels einer Schwenkeinrichtung 124 schwenkbar gelagert. Das Bezugszeichen 126 kennzeichnet eine Gelenkverbindung.

Dabei sind im in den Fig. 14a,b die Positionen der Verteileinrichtung, d. h. die Positionen P1 und P2 dargestellt.

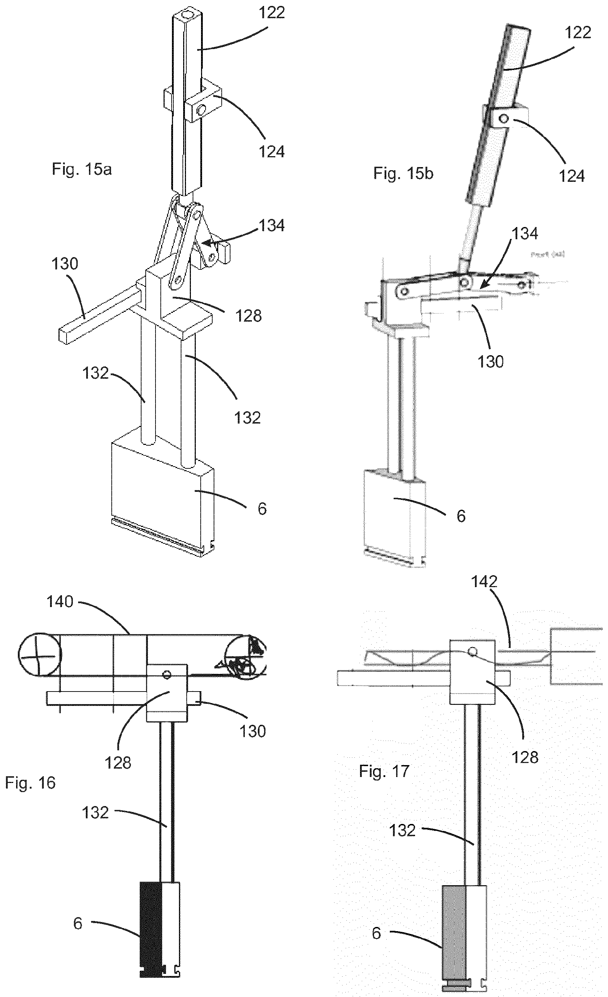

Die Fig. 15a, b zeigen eine weitere Ausgestaltung einer Antriebseinrichtung. Diese ist hier in ähnlicher Weise gestaltet wie in den Fig. 14a, b gezeigte Antriebseinrichtung, wobei hier jedoch noch ein Kniehebelmechanismus 134 eingesetzt wird, der insbesondere zu Beginn eines Verstellvorgangs (oder am Ende des Verstellvorgangs), je nach Bewegungsrichtung eine sehr hohe Verstellgeschwindigkeit bewirkt. In den Fig. 15a, b sind die beiden Positionen dieses Mechanismus gezeigt.

Figur 16 zeigt eine weitere Ausgestaltung einer Antriebseinrichtung. Dabei ist hier ein umlaufender Riemen 140 beispielsweise ein Zahnriemen vorgesehen, an dem der Schlitten 128 befestigt ist, wobei der Schlitten gegenüber der Führungsstange 130 gleiten kann.

Figur 17 zeigt eine weitere Ausgestaltung der Antriebseinrichtung. Hier ist eine Spindel 142 vorgesehen, welche wiederum den Schlitten 128 zwischen den beiden Positionen P1 und P2 antreiben kann.

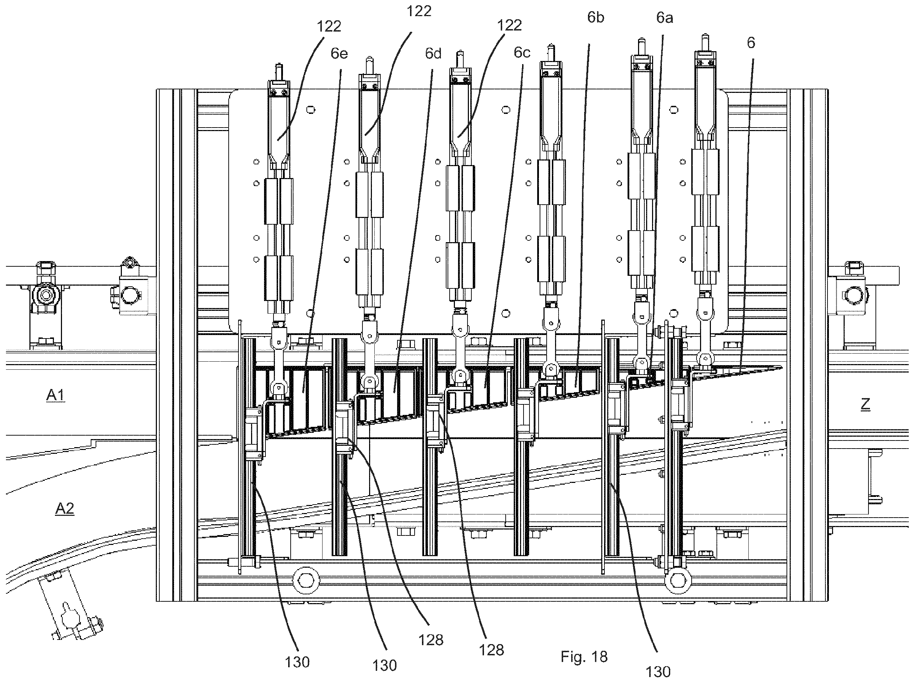

Figur 18 zeigt eine Draufsicht auf die erfindungsgemäße Vorrichtung. Hier sind insgesamt sechs Verteileinrichtungen dargestellt, die hier so positioniert sind, dass Stückgüter von dem Zuführpfad bzw. Zuführbereich Z zu dem zweiten Abführpfad A2 gelangen.

Die Bezugszeichen 128 zeigen jeweils einen Schlitten, der bzw. die bezüglich den Trägern 130 verschiebbar sind. Die Bezugszeichen 122 kennzeichnen die Antriebseinrichtungen, hier wiederum in Form von positionsgesteuerten Linearmotoren.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung zum Transportieren von Stückgütern und insbesondere von Behältnissen (10) oder Gebinden mit einer Zuführeinrichtung (2), welche dazu geeignet ist, die Stückgüter entlang wenigstens eines ersten Zuführpfads (Z) einem Verteilbereich (B) zuzuführen, wobei diese Zuführeinrichtung (2) eine erste Transporteinrichtung (22) aufweist, welche dazu geeignet und bestimmt ist, die Stückgüter entlang des Zuführpfads (Z) zu bewegen und mit einer Abführeinrichtung (4), welche dazu geeignet ist, die Stückgüter wahlweise entlang wenigstens eines ersten Abführpfads (A1) oder eines zweiten Abführpfads (A2) abzuführen, wobei die Abführeinrichtung wenigstens eine Transporteinrichtung aufweist, welche dazu geeignet und bestimmt ist, die Stückgüter entlang des ersten oder zweiten Abführpfads zu bewegen, wobei die Vorrichtung eine erste Verteileinrichtung (6) aufweist, welche zwischen wenigstens zwei Positionen (P1, P2) bewegbar ist, wobei die erste Verteileinrichtung (6), dazu geeignet und bestimmt ist, die Stückgüter bei Anordnung der Verteileinrichtung (6) in der ersten Position (P1) zu dem ersten Abführpfad (A1) zu drängen und die Stückgüter bei Anordnung der ersten Verteileinrichtung (6) in der zweiten Position (P2) zu dem zweiten Abführpfad zu drängen oder zu führen.

2. Vorrichtung (1) nach Anspruch 1,
**dadurch gekennzeichnet, dass**
die Verteileinrichtung quer zu der Transportrichtung (T) zwischen der ersten Position (P1) und der zweiten Position (P2) bewegbar ist.

3. Vorrichtung (1) nach wenigstens einem der vorangegangenen Ansprüche,
**dadurch gekennzeichnet, dass**
ist in einer Position der Verteileinrichtung (6) eine Transportgasse zum Transport der Stückgüter ausgebildet, welche sich von dem Zuführpfad (Z) zu dem ersten oder zweiten Abführpfad der Stückgüter erstreckt und in einer zweiten Position der Verteileinrichtung (6) ist eine Transportgasse zum Transport der Stückgüter ausgebildet, welche sich von dem Zuführpfad (Z) zu dem zweiten oder ersten Abführpfad der Stückgüter erstreckt, wobei die Verteileinrichtung in jeder der Positionen wenigstens einen Abschnitt einer Begrenzungswandung dieser jeweiligen Transportgasse ausbildet.

4. Vorrichtung (1) nach wenigstens einem der vorangegangenen Ansprüche,
**dadurch gekennzeichnet, dass**
die erste Verteileinrichtung (6) eine erste Drängfläche (62) aufweist, welche dazu geeignet und bestimmt ist, die Stückgüter (10) zu dem ersten Abführpfad (A1) zu drängen sowie eine zweite Dräng- und/oder Führungsfläche (64), welche dazu geeignet und bestimmt ist, die Stückgüter (10) zu dem zweiten Abführpfad (A2) zu drängen oder zu führen, wobei die erste Drängfläche (62) und die zweite Dräng- und/oder Führungsfläche (64) wenigstens abschnittsweise voneinander beabstandet sind.

5. Vorrichtung (1) nach dem vorangegangenen Anspruch,
**dadurch gekennzeichnet, dass**
die erste Drängfläche (62) dazu geeignet und bestimmt ist, die Stückgüter in den ersten Abführpfad (A1) zu drängen, wenn die Verteileinrichtung in der ersten Position (P1) angeordnet ist und die zweite Dräng- und/oder Führungsfläche (64) dazu geeignet und bestimmt ist, die Stückgüter in den zweiten Abführpfad (A2) zu drängen oder zu führen, wenn die Verteileinrichtung (6) in der zweiten Position (P2) angeordnet ist.

6. Vorrichtung (1) nach wenigstens einem der vorangegangenen Ansprüche 3 oder 4, **dadurch gekennzeichnet, dass**
sich ein Abstand zwischen der ersten Drängfläche (62) und der zweiten Drängfläche (64) in der Transportrichtung der Stückgüter vergrößert und/oder die Verteileinrichtung keilförmig ausgebildet ist.

7. Vorrichtung (1) nach wenigstens einem der vorangegangenen Ansprüche,
**dadurch gekennzeichnet, dass**
wenigstens eine der Positionen und bevorzugt beide Positionen (P1, P2) einstellbar ist/sind und bevorzugt diese Einstellung automatisiert durchführbar ist.

8. Vorrichtung (1) nach wenigstens einem der vorangegangenen Ansprüche 3 - 6,
**dadurch gekennzeichnet, dass**
wenigstens eine Dräng- und/oder Führungsfläche (62, 64) in einer Position der Verteileinrichtung (6) als Führungsfläche fungiert, welche den Transportpfad der Stückgüter quer zu der Transportrichtung begrenzt und bevorzugt beide Dräng- und/oder Führungsflächen in je einer Position der Verteileinrichtung als Führungsflächen fungieren, welche den Transportpfad der Stückgüter quer zu der Transportrichtung begrenzen.

9. Vorrichtung (1) nach wenigstens einem der vorangegangenen Ansprüche 3 - 6,
**dadurch gekennzeichnet, dass**
die Vorrichtung (1) eine Antriebseinrichtung (12) aufweist, welche dazu geeignet und bestimmt ist, die Verteileinrichtung zwischen der ersten Position und der zweiten Position zu bewegen, wobei bevorzugt diese Antriebseinrichtung wenigstens teilweise oberhalb oder unterhalb der Transporteinrichtungen angeordnet ist.

10. Vorrichtung (1) nach wenigstens einem der vorangegangenen Ansprüche 3 - 6,
**dadurch gekennzeichnet, dass**
die Vorrichtung (1) eine zweite Verteileinrichtung aufweist, welche in der Transportrichtung der Stückgüter (10) vor oder nach der ersten Verteileinrichtung angeordnet ist wobei auch diese zweite Verteileinrichtung zwischen einer ersten Position und einer zweiten Position bewegbar ist.

11. Vorrichtung nach wenigstens einem der vorangegangenen Ansprüche,
**dadurch gekennzeichnet, dass**
die Vorrichtung (1) wenigstens drei und bevorzugt wenigstens vier Verteileinrichtungen (6, 6a, 6b, 6c) aufweist, welche bevorzugt in der Transportrichtung der Stückgüter hintereinander angeordnet sind oder welche bevorzugt wenigstens zeitweise eine durchgehende Drängfläche ausbilden.

12. Vorrichtung nach wenigstens einem der vorangegangenen Ansprüche,
**dadurch gekennzeichnet, dass**
die Vorrichtung eine Lückenerzeugungseinrichtung aufweist, welche dazu geeignet und bestimmt ist, in einem Stückgüterstrom transportierter Stückgüter eine Lücke zu erzeugen, wobei bevorzugt die Lückenerzeugungseinrichtung in der Transportrichtung der Stückgüter vor der Verteileinrichtung (6, 6a..) und/oder vor dem, Verteilbereich angeordnet ist.

13. Vorrichtung (1) nach dem vorangegangenen Anspruch,
**dadurch gekennzeichnet, dass**
die Vorrichtung eine Steuerungseinrichtung aufweist, welche dazu geeignet und bestimmt ist, eine Bewegung der Verteileinrichtung (6) zwischen der ersten Position (P1) und der zweiten Position (P2) unter Berücksichtigung eine Aktivierung der Lückenerzeugungseinrichtung zu steuern.

14. Verfahren zum Transportieren von Stückgütern und insbesondere von Behältnissen (10) oder Gebinden wobei eine Zuführeinrichtung (2) die Stückgüter entlang wenigstens eines ersten Zuführpfads (Z) einem Verteilbereich (B) zuführt, wobei diese Zuführeinrichtung (2) eine erste Transporteinrichtung (22) aufweist, welche die Stückgüter entlang des Zuführpfads (Z) bewegt wobei wenigstens eine Abführeinrichtung (4) die Stückgüter wahlweise entlang wenigstens eines ersten Abführpfads (A1) oder eines zweiten Abführpfads (A2) abführt, wobei die Abführeinrichtung wenigstens eine Transporteinrichtung aufweist, welche die Stückgüter entlang des ersten und/oder zweiten Abführpfads bewegt, wobei die Vorrichtung eine erste Verteileinrichtung (6) aufweist, welche zwischen wenigstens zwei Positionen (P1, P2) bewegt wird, wobei die erste Verteileinrichtung (6), die Stückgüter bei Anordnung der Verteileinrichtung (6) in der ersten Position (P1) zu dem ersten Abführpfad (A1) drängt und die Stückgüter bei Anordnung der ersten Verteileinrichtung (6) in der zweiten Position (P2) zu dem zweiten Abführpfad drängt und/oder führt.

15. Verfahren nach dem vorangegangenen Anspruch,
**dadurch gekennzeichnet, dass**
eine zweite Verteileinrichtung (6a) ebenfalls zwischen einer ersten Position und einer zweiten Position bewegt wird, wobei die Bewegung der zweiten Verteileinrichtung unabhängig von der Bewegung der ersten Verteileinrichtung durchgeführt wird und die erste und die zweite Verteileinrichtung bevorzugt in der Transportrichtung der Stückgüter unmittelbar hintereinander angeordnet sind.
